# EUROPÄISCHE PATENTSCHRIFT

(11) **EP 1 526 289 B1**
(45) Veröffentlichungstag und Bekanntmachung des Hinweises auf die Patenterteilung: **06.09.2006**
(21) Anmeldenummer: 04022742.3
(22) Anmeldetag: 24.09.2004
(51) Int. Cl.: F15B 13/04, F15B 13/06

(54) **Ventil für Fluidsystem**
Valve for a fluid system
Distributeur pour un système fluidique

(30) Priorität: 23.10.2003 DE 10349228
(43) Veröffentlichungstag der Anmeldung: 27.04.2005
(73) Patentinhaber: Tries GmbH & CO. KG, 89584 Ehingen (DE)
(72) Erfinder: Tries, Manfred, 89584 Ehingen (DE)
(74) Vertreter: Eisele, Otten, Roth & Dobler

(56) Entgegenhaltungen:
- EP-A- 0 882 919
- BE-A- 528 346
- DE-A1- 19 633 191
- FR-A- 1 227 434
- US-A- 3 015 344

## Beschreibung

Die vorliegende Erfindung betrifft ein Ventil für Fluidsysteme nach dem Oberbegriff des Anspruchs 1. Ein Ventil nach dem Oberbegriff des Anspruchs 1 ist z.B. aus DE-A-196 33 191 bekannt.

Fluidsteuerungen und/oder Fluidregelungen benötigen für die Realisierung ihrer Funktionen entsprechende Stellelemente. Solche Stellelemente sind beispielsweise Regel- oder Schaltventile.

Insbesondere bei Hydrauliksteuerungen und/oder -regelungen wird das Medium für die Ansteuerung der Aktoren, wie z.B. Zylinder oder Motoren mit hohem Druck beaufschlagt. So können beispielsweise Pumpen eingesetzt werden, die für den Vorsteuerölstrom einen Druck von 30 bar und eine Förderleistung von 10 1 pro Minute erreichen, und für den Hauptölstrom einen Druck von 300 bar und eine Förderleistung von 100 1 pro Minute.

Wenn die Stellelemente in solchen Druckbereichen betrieben werden kann es vorkommen, dass ein Teil des Ölstromes, welcher von den Versorgungsanschlüssen zu ersten Arbeitsanschlüssen durchgeschaltet ist, auch zu zweiten, nicht durchgeschalteten Arbeitsanschlüssen durchdrückt, und den daran angeschlossenen Aktor mit Druck beaufschlagt, obwohl dieser sich im nicht betätigten Zustand befindet. Dabei kann es insbesondere vorkommen, dass lediglich eine Leitung eines Paares von Arbeitsanschlüssen (Zuflussleitung und Rückflussleitung) mit Lecköl beaufschlagt wird. Die Aktoren erfahren also eine einseitige Druckbelastung über die Zu- oder Rückflussleitung des Hydrauliköls, je nachdem, welcher der beiden Anschlüsse mit Lecköl und dessen Druck beaufschlagt wird.

Dadurch ergeben sich im Wesentlichen zwei Nachteile. Der ersten Nachteil liegt darin, dass der betroffene Aktor eine Arbeitbewegung ausführt, die nicht gewünscht ist und somit ein entsprechendes Schadens- und Gefahrenspotential mit sich bringt.

Als zweiter Nachteil entsteht die Problematik, dass die Aktoren für eine solche einseitige Druckbeaufschlagung nicht ausgelegt sind. D.h. die mechanischen Bauteile werden über ihre zulässigen Grenzwerte hinaus mit Druck belastet, so dass dadurch Schäden an ihnen entstehen können. So kann beispielsweise bei einem doppelt wirkenden Zylinder das Zylindergehäuse durch den zu hohen Druck beschädigt werden. Entsprechende Schäden können selbstverständlich auch bei Hydraulikmotoren und anderen Komponenten des Hydrauliksystems auftreten.

Als Folgeerscheinungen treten Leckagen auf, die einen sehr raschen Austritt des Hydrauliköles aus dem System bewirken können, mit allen entsprechenden Problemen, wie beispielsweise die Gefahr der Verletzung von Personen im entsprechenden Umkreis, die Ölverschmutzung des betroffenen Umfeldes mit den damit einhergehenden zusätzlichen Auswirkungen, der Ausfall des Gerätes selbst, die Reparaturund Instandsetzungskosten und dergleichen mehr.

Die Aufgabe der vorliegenden Erfindung ist es deshalb, ein Ventil für Fluidsysteme so weiterzubilden, dass die oben dargelegten Nachteile minimiert oder sogar eliminiert werden.

Diese Aufgabe wird ausgehend von einem handelsüblichen Hydraulikventil nach der einleitend genannten Art durch die kennzeichnenden Merkmale des Anspruchs 1 gelöst. Durch die in den Unteransprüchen genannten Maßnahmen sind vorteilhafte Ausführungsformen und Weiterbildungen der Erfindung möglich.

Dementsprechend zeichnet sich ein erfindungsgemäßes Ventil für Fluidsysteme, insbesondere für Hydrauliksysteme, mit zwei ersten Arbeitsanschlüssen C, D für den Zu- und Abfluss des Fluides zu einer ersten, fluidbetätigbaren Vorrichtung und zwei zweiten Arbeitsanschlüssen E, F für den Zu- und Abfluss des Fluides zu einer zweiten fluidbetätigbaren Vorrichtung, und zwei Versorgungsanschlüssen A, B für den versorugungsseitigen Zu- und Abfluss des Fluides dadurch aus, das eine fluidleitende Kurzschluss-Verbindung zwischen den in der jeweiligen Schaltstellung nicht mit den Versorgungsanschlüssen A, B verbundenen Arbeitsanschlüssen C, D bzw. E, F vorhanden ist.

Durch die Ausbildung einer Kurzschluss-Verbindung zwischen den in der jeweiligen Schaltstellung nicht mit den Versorgungsanschlüssen A, B verbundenen Arbeitsanschlüssen C, D bzw. E, F wird gewährleistet, dass bei Einbruch von Lecköl in einen der beiden, nicht durchgeschalteten Arbeitsanschlüsse E, F bzw. C, D sichergestellt ist, dass beide Arbeitsanschlüsse, also sowohl die Zuleitung als auch die Rückleitung zu dem jeweiligen Aktor mit dem gleichen Öldruck beaufschlagt werden. Dadurch wird eine einseitige Belastung des betroffenen Aktors vermieden, wodurch die eingangs beschriebenen Nachteile, die sich nach dem bisher bekannten Stand der Technik ergeben können, zumindest minimiert, im optimalen Fall sogar vollständig eliminiert werden.

In einer bevorzugten Ausführungsform kann es vorgesehen sein, dass eine mit fluidleitenden Verbindungselementen versehene, für den Einsatz in einem Gehäuse geeignete Ventilpatrone vorhanden ist. Der Vorteil einer solchen Ausführungsform kann beispielsweise darin liegen, dass eine solche Patrone jederzeit gegen eine andere Patrone ersetzt werden kann, ohne dass es erforderlich ist, das gesamte Ventil auszutauschen. Der Grund für den Wechsel der Ventilpatrone kann dabei vielfältiger Art sein. Sei es, dass die Ventilpatrone selbst, oder Verschleißerscheinungen unterliegende Komponenten der Ventilpatrone nicht mehr einwandfrei funktionieren, oder dass eine geänderte Funktion des Ventiles gewünscht wird. Die Ursache für den Änderungswunsch ist sekundär, wesentlich ist, dass durch ein einfaches Ersetzen der Ventilpatrone innerhalb kürzester Zeit das Ventil in der gewünschten Funktionsweise wieder zur Verfügung steht.

In einer weiteren Ausführungsform kann es beispielsweise vorgesehen sein, dass ein mit fluidleitenden Verbindungselementen versehenes Gehäuse mit einer Aufnahme für die Ventilpatrone versehen ist. In ein solches Gehäuse können vorteilhafterweise Ventilpatronen in unterschiedlichen Ausführungsformen eingesetzt werden, so dass dadurch gegebenenfalls anwendungsabhängig geänderte Funktionen realisierbar sind.

In einer nächsten Ausführungsform kann es vorgesehen sein, dass die Ventilpatrone einen verschiebbaren Stößel umfasst. Dadurch ergibt sich beispielsweise eine sehr kompakte Bauweise für ein solches Ventil.

In einer speziellen Ausführungsform kann es dabei vorgesehen sein, dass der Stößel mit fluidleitenden Verbindungselementen versehen ist. Diese Verbindungselemente können z.B.

Bohrungen, Ringnuten, Einstiche und dergleichen mehr sein. Durch Verschieben des Stößels in der Patrone können beispielsweise Schalt- und/oder Regelfunktionen realisiert werden. Durch die Ausbildung dieser fluidleitenden Verbindungselemente in oder an dem Stößel kann beispielsweise eine weitere Minimierung an Raumbedarf und/oder eine einfache Herstellung des Ventiles erreicht werden.

In einer weiteren Ausführungsform kann es vorgesehen sein, dass wenigstens ein Teil der Kurzschluss-Verbindung für die Arbeitsanschlüsse C, D bzw. E, F im Gehäuse für die Aufnahme der Ventilpatrone angeordnet ist. Dadurch ist gewährleistet, dass eine einseitige Belastung bei Einbruch von Lecköl zu einem der beiden Anschlüsse C, D bzw. E, F in den nicht durchgeschalteten Arbeitsanschluss verhindert wird. Diese Ausführungsform kann somit unabhängig von der einzusetzenden Ventilpatrone immer mit einer fluidleitenden Kurzschluss-Verbindung zwischen den jeweiligen Arbeitsanschlüssen E und F bzw. C und D versehen sein.

In einer weiteren Ausführungsform kann es vorgesehen sein, dass wenigstens ein Teil der Kurzschluss-Verbindung für die Arbeitsanschlüsse C und D bzw. E und F in der Ventilpatrone angeordnet ist. Somit kann gegebenenfalls ein einfach aufgebautes Gehäuse durch Ersetzen der Patrone mit dieser Sicherheitsfunktion erweitert werden.

In einer überdies vorteilhaften Ausführungsform kann es vorgesehen sein, dass wenigstens ein Teil der Kurzschluss-Verbindung für die Arbeitsanschlüsse C und D bzw. E und F im Stößel angeordnet ist. Hierdurch kann beispielsweise die Funktion einer gegebenenfalls einfach aufgebauten Patrone erweitert werden.

Grundsätzlich ist es selbstverständlich auch möglich, dass die Kurzschluss-Verbindung über zwei oder auch alle drei beschriebenen Elemente, Gehäuse, Patrone und Stößel ausgebildet ist. Dadurch kann beispielsweise eine vorteilhafte Führung des Ölstromes und/oder eine kompaktere oder einfachere Bauweise für das Ventil erreicht werden.

In einer bevorzugten Ausführungsform kann es vorgesehen sein, dass das Ventil als 6/2-Wegeventil ausgebildet ist. Ein solches 6/2-Wegeventil weist den Vorteil auf, dass es im Steuer- bzw. Regelfall direkt von einer Arbeitseinheit oder deren Bewegungsrichtung auf die andere Arbeitseinheit oder deren Bewegungsrichtung umschalten kann, wobei sehr geringe Verzögerungszeiten zwischen den beiden Schaltzuständen erreicht werden können.

In einer demgegenüber abgewandelten Ausführungsform kann es vorgesehen sein, dass das Ventil als 6/3-Wegeventil ausgebildet ist. Ein solches 6/3-Wegeventil hat den Vorteil, dass die ersten durchgeschalteten Arbeitsanschlüsse länger von den Versorgungsanschlüssen getrennt und damit abgeschaltet sind, bis die zweiten durchzuschaltenden Arbeitsanschlüsse fluidleitend durchgeschaltet sind, als dies beispielsweise bei der demgegenüber schneller schaltenden 6/2-Wegeventil-Ausführungsform der Fall ist. Durch einen solchen Aufbau kann beispielsweise eine zusätzliche Sicherheitsreserve dahingehend erzielt werden, dass die zuvor angesteuerte Vorrichtung oder deren Bewegung auf alle Fälle zum Stillstand kommt, bevor die nächste Vorrichtung oder deren Bewegung aktiviert wird.

In einer nächsten Ausführungsform kann es vorgesehen sein, dass eine neutrale Schaltstellung für das Ventil ausgebildet ist, in der weder die ersten Arbeitsanschlüsse E, F noch die zweiten Arbeitsanschlüsse C, D mit den Versorgungsanschlüssen A, B durchgeschaltet sind.

Diese'Ausführungsform bietet den Vorteil, dass sie in einen Zustand versetzt werden kann, in dem keiner der Arbeitsanschlüsse fluidleitend durchgeschaltet ist. Dazu sind wahlweise unterschiedliche Ausführungsformen denkbar. In einer ersten, einfachen Ausführungsform kann es vorgesehen sein, dass in dieser Schaltstellung alle Anschlüsse, also die beiden ersten und zweiten Arbeitsanschlüsse C, D bzw. E, F sowie auch die Versorgungsanschlüsse A, B allesamt lediglich einzeln für sich geschlossen sind.

In einer demgegenüber abgewandelten Ausführungsform ist es beispielsweise vorstellbar, dass wenigstens die ersten oder zweiten Arbeitsanschlüsse C und D bzw. E und F in dieser Schaltstellung eine Kurschluss-Verbindung aufweisen. In einer demgegenüber bevorzugten Ausführungsform ist es aber auch möglich, dass sowohl für beide Arbeitsanschlüsse C und D bzw. E und F als auch für die Versorgungsanschlüsse A und B eine Kurschluss-Verbindung in dieser Schaltstellung ausgebildet ist.

In einer weiteren Ausführungsform kann es vorgesehen sein, dass für die Betätigung des Ventiles eine Magnetspule vorhanden ist. Durch die Anordnung einer Magnetspule, die beispielweise gegen eine Feder arbeitet, ist es möglich, das Ventil elektrisch gegen die Kraft der Feder zu verstellen.

In einer demgegenüber bevorzugten Ausführungsform kann es vorgesehen sein, dass die Magnetspule als Zweiwege-Magnetspule ausgebildet ist. Dadurch kann beispielsweise ein 6/3-Wegeventil realisiert werden, welches mittels Federkraft in der Neutralstellung gehalten wird und je nach Ansteuerung der Magnetspule die ersten bzw. zweiten Arbeitsanschlüsse C, D bzw. E, F mit den Versorgungsanschlüssen A, B fluidleitend durchschaltet.

In einer weiteren Ausführungsform kann es vorgesehen sein, dass für die Rückstellung des Ventils eine Feder vorhanden ist. Diese Feder kann beispielsweise die Rückstellung des Ventiles bewirken, wenn das Ventil entweder, wie oben beschrieben über eine Magnetspule aktiviert wird, oder wenn sie beispielsweise über ein Fluid verstellt wird. Vorzugsweise ist das Fluid dann ebenfalls ein Hydrauliköl, es ist aber durchaus auch möglich, ein gasförmiges Medium für die Ansteuerung vorzusehen. Selbstverständlich können aber auch eine Nockensteuerung, eine Handbetätigung und dergleichen mehr für die Aktivierung des Ventils vorgesehen sein. Die Feder bewirkt die Rückstellung, sobald die auf das Ventil wirkende Stellkraft kleiner als die Federkraft ist.

In einer besonderen Ausführungsform kann es vorgesehen sein, dass das Ventil als Teil eines mit mehreren Ventilen verbindbaren Ventilblocks ausgebildet ist. In einer solchen Ausführungsform kann es beispielsweise vorgesehen sein, dass einzelne Ventile oder auch Ventilgruppen zu einer größeren Schalt- und/oder Regeleinheit zusammengeschaltet sind. Dadurch ist die Realisierung von Schalt- und/oder Regelkreisen in Blockform möglich. Gegebenenfalls können solche Blöcke wiederum entsprechend ihrer Funktionen sinnvoll weiter zusammen in eine Steuerung und/oder Regelung eingebaut werden.

Anhand der beigefügten Zeichnungen werden nachfolgend verschiedene Ausführungsbeispiele des erfindungsgemäßen Ventils für Fluidsysteme näher beschrieben. Es zeigen:
- Figur 1: Das Schaltbildsymbol eines erfindungsgemäßen 6/2-Wegeventils,
- Figuren 2 bis 4: die Schaltbildsymbole eines 6/3-Wegeventiles, jeweils zusammen mit einem möglichen Ausführungsbeispiel anhand dargestellter leitender und nicht leitender Schaltverbindungen,
- Figur 5: ein Schaltbildsymbol für eine weitere Ausführungsform eines erfindungsgemäßen 6/3-Wegeventiles,
- Figur 6: einen beispielhaften Schaltplan, in dem ein erfindungsgemäßes 6/2-Wegeventil im Stromkreis des Vorsteuerölstroms angeordnet ist,
- Figur 7: einen Schnitt durch einen beispielhaften Aufbau eines erfindungsgemäßen Ventiles,
- Figuren 8 und 9: jeweilige Seitenansichten zu einem Ventil entsprechend der Figur 7 und
- Figur 10: eine Unteransicht auf das Ventil nach Figur 7.

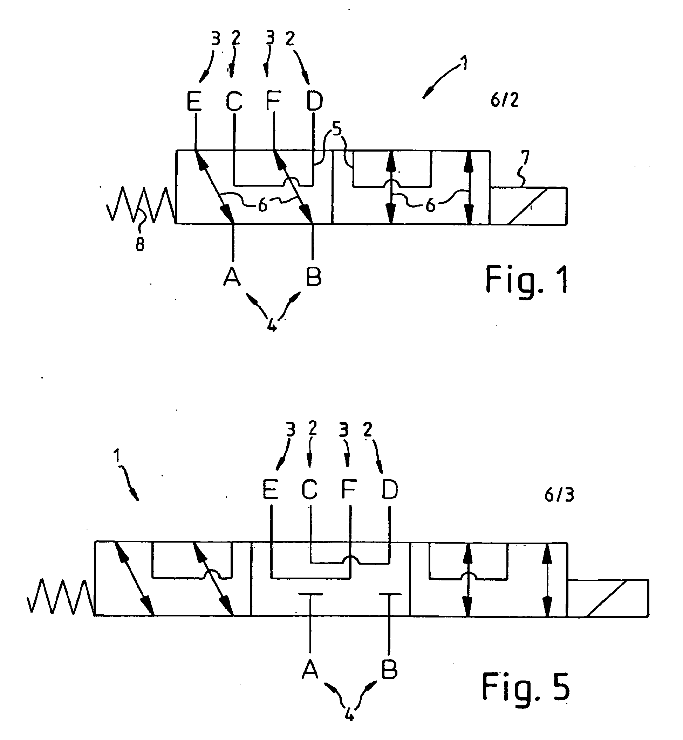

Figur 1 zeigt ein Schaltbildsymbol für ein 6/2-Wegeventil in der erfindungsgemäßen Ausführungsform. Dazu sind im linken Schaltblock die Anschlüsse C und D des Arbeitsanschlusses 2 und im rechten Schaltblock die Anschlüsse E und F des Arbeitanschlusses 3 mit Kurzschluss-Verbindungen 5 versehen. Diese Kurzschluss-Verbindungen stellen sicher, dass bei Einbruch eines Leckölstroms an einen der beiden Anschlüsse C oder D bzw. E oder F des jeweils nicht durchgeschalteten Arbeitsanschlusses zwingend auch der zweite Anschluss mit dem gleichen Öldruck beaufschlagt wird. Dadurch wird erreicht, dass sowohl die Zuleitung als auch die Rückleitung des betroffenen Arbeitsanschlusses mit dem gleichen Öldruck beaufschlagt werden. Als Betätigungsorgane sind eine Spule 7 und eine Feder 8 symbolisch dargestellt.

Je nach dem, welche Schaltstellung betrachtet wird, die linke oder die rechte in der dargestellten Ausführungsform, ist die Durchschaltung des von der Pumpe geförderten Ölstroms über den Versorgungsanschluss A zum Arbeitsanschluss E bzw. C und die Rückleitung über den Arbeitsanschluss F bzw. D an den Tankanschluss B realisiert.

Aufgrund der Tatsache, dass die mechanischen Bauteile einerseits gewisse Toleranzen bei der Fertigung aufweisen, und andererseits solche auch benötigen, um funktionstüchtig zu sein, kann bei hohen Öldrücken aus einer dieser beschriebenen Verbindungen A-E, F-B Lecköl an einer entsprechenden Stelle an einen der Anschlüsse C oder D des anderen Arbeitsanschlusses durchsickern. Die Kurzschluss-Verbindung 5 zwischen den Anschlüssen C und D sorgt in diesem Fall für den entsprechenden Druckausgleich zwischen diesen beiden Anschlüssen C und D. Das Gleiche gilt im entsprechenden Fall für die rechte Schaltstellung, bei der der Arbeitsanschluss 2 mit dem Versorgungsanschluss 4 durchgeschaltet ist. In diesem Fall ist der Arbeitsanschluss 3 nicht durchgeschaltet und das Ventil weist in dieser Stellung eine Kurzschluss-Verbindung 5 für die Anschlüsse E und F auf, um ebenfalls sicherzustellen, dass an beiden Anschlüssen E und F bei Einbruch eines Leckölstroms der gleiche Druck vorherrscht.

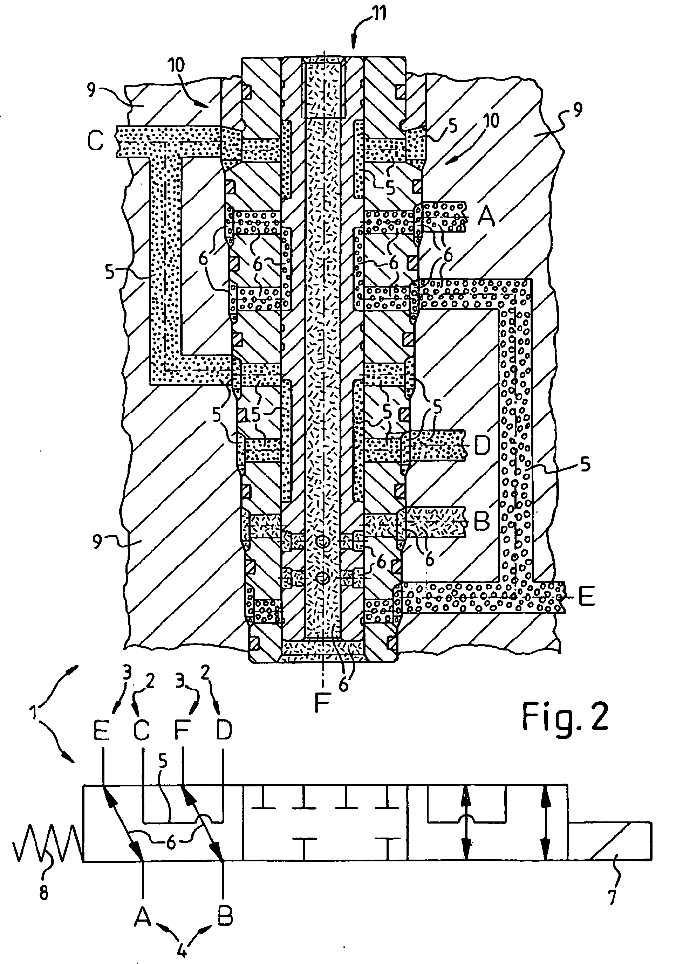

Die Figur 2 zeigt ein Schaltbildsymbol für ein erfindungsgemäßes 6/3-Wegeventil sowie eine Darstellung von fluidleitenden Verbindungen in einem Ventil entsprechend der gezeigten Schaltstellung aus dem Schaltplansymbol. Im linken Symbolblock des Schaltplansymbols ist der Arbeitsanschluss 3 für das Ventil 1 über die Schaltverbindungen 6 mit dem Versorgungsanschluss 4 verbunden. Für den Arbeitsanschluss 2 ist zwischen den Anschlüssen C und D die Kurzschluss-Verbindung 5 ausgebildet.

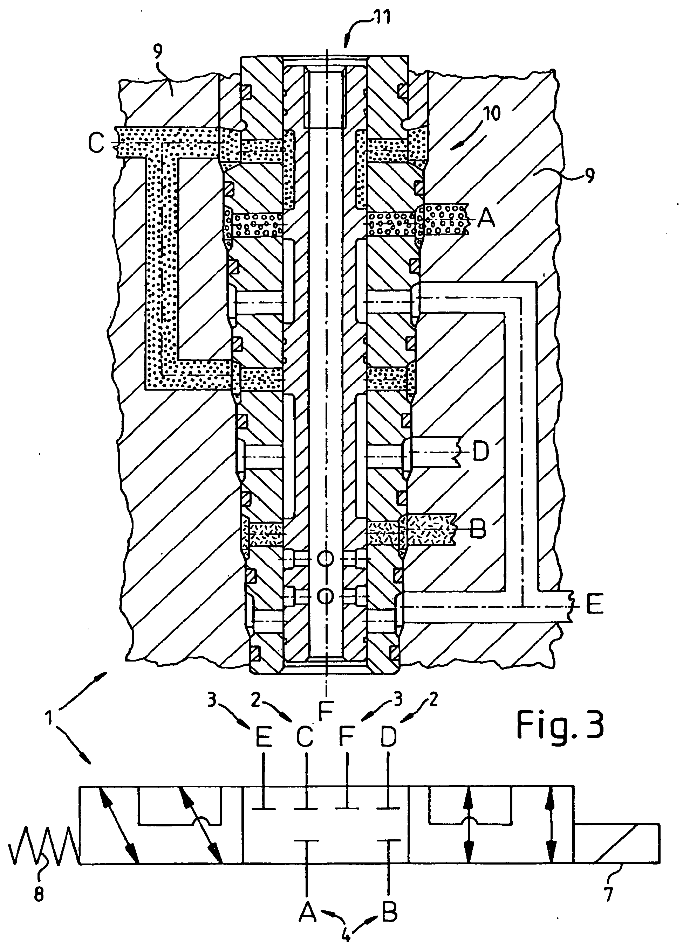

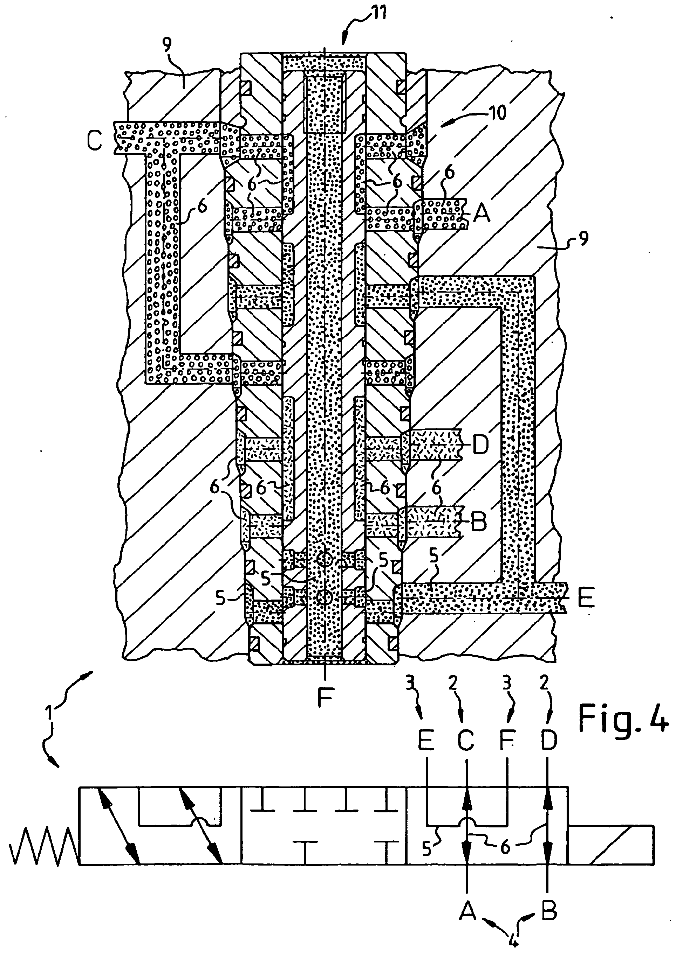

Im mittleren Symbolblock sind alle Anschlüsse A bis F im verschlossenen Zustand dargestellt. Hierbei handelt es sich um die Neutralstellung des 6/3-Wegeventils. Im rechten Symbolblock ist die komplementäre Schaltverbindung für die Durchschaltung des Arbeitsanschlusses 2 mit dem Versorgungsanschluss 4 gezeigt. In dieser Schaltstellung ist für den Arbeitsanschluss 3 zwischen den Anschlüssen E und F eine Kurzschluss-Verbindung 5 vorgesehen. Details zur neutralen Schaltstellung und zur Schaltung, in der der Arbeitsanschluss 2 mit dem Versorgungsanschluss 4 verbunden ist, finden sich in den Erläuterungen zu den Figuren 3 und 4.

Die über dem Schaltsymbol beispielhaft dargestellten fluidleitenden Verbindungen symbolisieren den teilweisen Aufbau eines erfindungsgemäßen Ventils mit einem Gehäuse 9 in welchem eine Patrone 10 angeordnet ist. In diesem Gehäuse 9 ist ein Teil der Kurzschluss-Verbindung 5 zwischen dem Anschluss C und dem Anschluss D ausgebildet. Ein weiterer Teil dieser Kurzschluss-Verbindung 5 zwischen den Anschlüssen C und D des Arbeitsanschlusses 2 ist in der Patrone 10 ausgebildet. Dieser Teil der Kurzschluss-Verbindung 5 ist zum Teil als Einstich in die Außenkontur der Patrone und zum Teil als Bohrung ausgebildet.

Im Inneren der Patrone 10 ist ein Stößel 11 angeordnet. Dieser Stößel 11 weist ebenfalls Teile der Kurzschluss-Verbindung 5 auf, die zwischen dem Anschluss C und dem Anschluss D in dieser Schaltstellung des Ventils 1 realisiert ist.

Die Schaltverbindung 6 zwischen dem Anschluss A des Versorgungsanschlusses 4 und dem Anschluss E des Arbeitsanschlusses 3 ist ebenfalls über alle drei Einheiten, Gehäuse 9, Patrone 10 und Stößel 11 verteilt ausgebildet. Die zweite Schaltverbindung 6 vom Tankanschluss, also dem Anschluss B des Versorgungsanschlusses 4 zum Anschluss F des Arbeitsanschlusses 3, ist ebenfalls über alle drei Einheiten, Gehäuse 9, Patrone 10 und Stößel 11, ausgebildet.

Der Stößel weist in dieser Ausführungsform eine axial ausgebildete, durchgehende Bohrung auf, die stirnseitig mit dem Anschluss F verbunden ist. Mit dieser verbunden sind zwei axial voneinander beabstandete, radial ausgerichtete Kreuzbohrungen, die je nach Schaltstellung Teil der Schaltverbindung 6 bzw. der Kurschluss-Verbindung 5 sind.

Die Figur 3 zeigt wiederum das Schaltplansymbol für das Ventil 1 und darüber angeordnet die fluidleitenden Verbindungen in einem beispielhaft dargestellten Ventil mit Ventilpatrone 10 und darin angeordnetem Stößel 11. In dieser Ansicht ist der Stößel gegenüber der Ansicht in der Figur 2 axial nach unten verschoben, so dass keine Verbindungen zwischen den einzelnen Anschlüssen der Arbeits- und Versorgungsanschlüsse 2 bis 4 mehr bestehen. Das heißt, es ist also weder einer der Arbeitsanschlüsse 2, 3 mit dem Versorgungsanschluss 4 über Schaltverbindungen 6 verbunden, noch bestehen Kurzschluss-Verbindungen 5 zwischen den einzelnen Anschlüssen C und D bzw. E und F der Arbeitsanschlüsse. Im Schaltplansymbol wird das durch die entsprechenden Leitungsabschlüsse im mittleren Schaltblock dargestellt.

In der Darstellung der fluidleitenden Verbindungen in der Ausführungsform des Ventils 1 ist dies durch die verschobene Position des Stößels 11 entlang seiner Achse im Inneren der Patrone 10 realisiert. Die Patrone 10 ist dabei unverändert im Gehäuse 9 angeordnet.

Die Darstellung der Figur 4 ist die komplementäre Schaltdarstellung zur Darstellung in Figur 2. Dies gilt sowohl für das Schaltplansymbol als auch für die Darstellung der fluidleitenden Verbindungen in dem Ausführungsbeispiel des Ventils 1. Im Schaltplansymbol ist der rechte der drei Symbolblöcke mit den beiden Arbeitsanschlüssen 2, 3 und dem Versorgungsanschluss 4 verbunden. Dieser Schaltzustand spiegelt sich selbstverständlich im darüber gezeigten Ausführungsbeispiel wieder. Durch weiteres Verschieben des Stößels 11 in axialer Richtung nach unten hin gegenüber den Darstellungen in den Figuren 2 und 3 sind die Verbindungen A-C und D-B mittels der Schaltverbindung 6 durchgeschaltet. Diese Verbindungen sind ebenfalls wiederum über alle drei Elemente des Ventils 1, also dem Gehäuse 9, der Patrone 10 und dem Stößel 11 ausgebildet. Die Kurzschluss-Verbindung ist entsprechend zwischen den Anschlüssen E und F dargestellt.

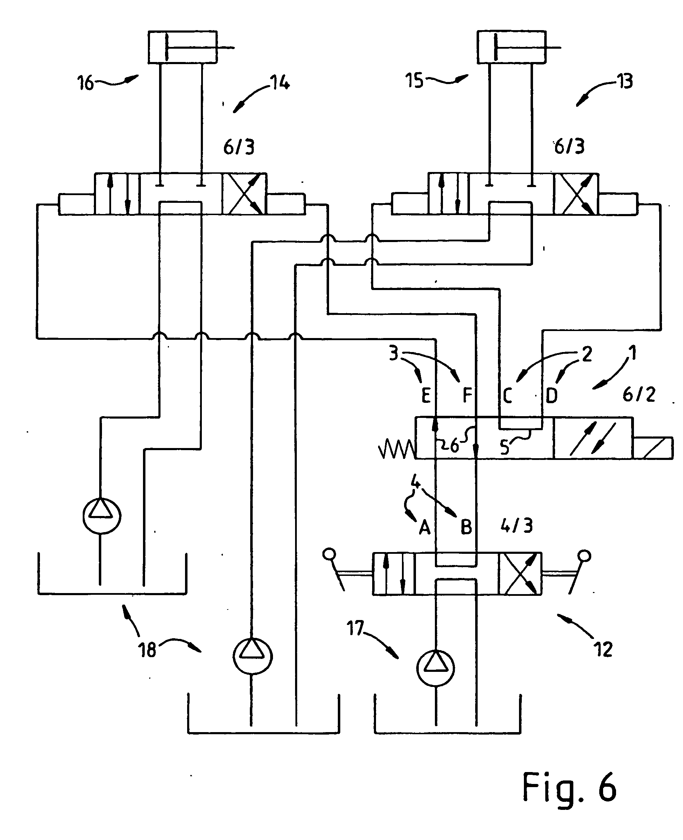

Die Figur 5 zeigt ein weiteres Schaltplansymbol für eine mögliche Ausführungsform eines 6/3-Wegeventils. In dieser Darstellung sind die Anschlüsse C und D des Arbeitsanschlusses 2 und die Anschlüsse E und F des Arbeitsanschlusses 3 im neutralen Schaltzustand des Ventils 1 jeweils durch Kurzschluss-Verbindungen 5 miteinander verbunden. Die Anschlüsse A und B des Versorgungsanschlusses 4 sind voneinander getrennt verschlossen dargestellt.

In der Figur 6 ist eine beispielhafte Darstellung eines Hydraulikschaltplanes mit Vorsteuer- und Hauptölstromkreis gezeigt, bei der ein erfindungsgemäßes Ventil für Fluidsysteme in der Form eines 6/2-Wegeventils eingesetzt ist. Das Ventil 1 liegt im Vorsteuerölstromkreis und betätigt, je nach Schaltstellung eines der beiden Hauptsteuerventile 13 bzw. 14 im Hauptölstromkreis. Der Vorsteuerölstrom wird von der Pumpe der Ölversorgung 17 erzeugt. In diesem Schaltkreis herrscht beispielsweise ein Druck von 30 bar bei einer Förderleistung von 10 1 pro Minute. Damit werden die Hauptsteuerventile 13 bzw. 14 für die beiden Arbeitszylinder 15 bzw. 16 angesteuert. Im Hauptölstrom herrscht beispielsweise ein Druck von 300 bar bei einer Versorgungsleistung von 100 1 pro Minute. Versorgt werden die beiden Hauptölstromkreise aus den jeweiligen Ölversorgungen 18.

Je nachdem, in welcher Schaltstellung sich nun das 6/2-Wegeventil befindet, wird entweder das Hauptsteuerventil 13 oder das Hauptsteuerventil 14 über den entsprechenden Arbeitsanschluss 2 bzw. 3 angesteuert. Der jeweils andere Arbeitsanschluss 3 bzw. 2 weist dann eine Kurzschluss-Verbindung 5 zwischen seinen beiden Anschlüssen C und D bzw. E und F auf.

Die Richtung des durchströmenden Öls im Vorsteuerstromkreis wird mittels dem Vorsteuergerät 12 vorgegeben. Je nachdem in welcher Steuerstellung das Vorsteuergerät aktiviert wird, fließt der Vorsteuer-Ölstrom in gerader bzw. in gekreuzter Durchflussrichtung durch das Vorsteuergerät 12 und wirkt entsprechend auf das gleichzeitig durch das Ventil 1 angesteuerte Hauptsteuerventil 13 bzw. 14. Dementsprechend wird der betreffende Arbeitszylinder 15 bzw. 16 durch das jeweilige Hauptsteuerventil 13 bzw. 14 aus- oder einfahrend angesteuert.

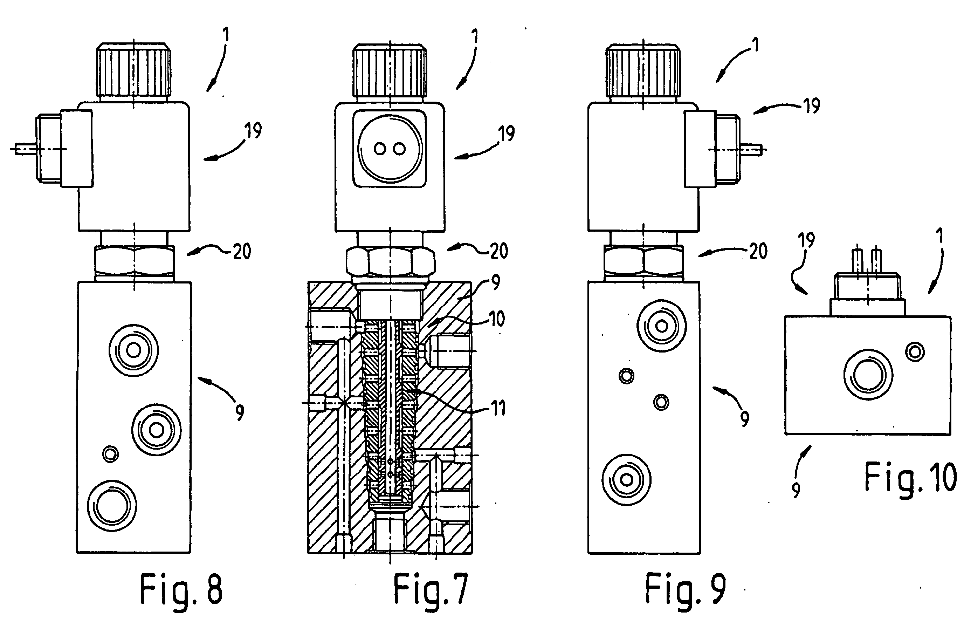

Die Darstellung der Figur 7 zeigt eine Schnittdarstellung eines erfindungsgemäßen Ventiles 1 mit dem Gehäuse 9, der darin angeordneten Patrone 10 und dem in der Patrone angeordneten Stößel 11. Darauf aufgesetzt ist der elektromagnetische Aufbau 19 mit seinen entsprechenden mechanischen Verbindungselementen 20 dargestellt.

Die Figuren 8 und 9 zeigen jeweils eine Seitenansicht des Ventiles 1 nach Figur 7 mit dem von außen sichtbaren Gehäuse 9, dem elektromagnetischen Aufbau 19 und dessen mechanischen Verbindungselementen 20.

Die Figur 10 zeigt eine Unteransicht des Ventiles 1 nach Figur 7. Dabei ist das Gehäuse 9 im rechteckigen Grundriss erkennbar, zentral in seiner Mitte der Anschluss F des Arbeitsanschlusse 3 und nach oben hin ein Teil des elektromagnetischen Aufbaus 19.

### Bezugszeichenliste:

- 1: Ventil
- 2: Arbeitsanschluss
- 3: Arbeitsanschluss
- 4: Versorgungsanschluss
- 5: Kurzschluss-Verbindung
- 6: Schaltverbindung
- 7: Spule
- 8: Feder
- 9: Gehäuse
- 10: Patrone
- 11: Stößel
- 12: Vorsteuergerät
- 13: Hauptsteuerventil
- 14: Hauptsteuerventil
- 15: Arbeitszylinder
- 16: Arbeitszylinder
- 17: Ölversorgung
- 18: Ölversorgung
- 19: Elektromagnetischer Aufbau
- 20: Mechanische Verbindungselemente

## Patentansprüche

1. Ventil (1) für Fluidsysteme, insbesondere für Hydrauliksysteme, mit zwei ersten Arbeitsanschlüssen (C, D) für den Zu- und Abfluss des Fluids zu einer ersten, fluidbetätigbaren Vorrichtung, und zwei zweiten Arbeitsanschlüssen (E, F) für den Zu- und Abfluss des Fluids zu einer zweiten fluidbetätigbaren Vorrichtung, und zwei Versorgungsanschlüssen (A, B) für den versorgungsseitigen Zu- und Abfluss des Fluids, **dadurch gekennzeichnet, dass** eine fluidleitende Kurzschluss-Verbindung (5) zwischen den in der jeweiligen Schaltstellung nicht mit den Versorgungsanschlüssen (A, B) verbundenen Arbeitsanschlüssen (C und D bzw. E und F) vorhanden ist.

2. Ventil (1) nach Anspruch 1, **dadurch gekennzeichnet, dass** eine mit fluidleitenden Verbindungselementen versehene, für den Einsatz in einem Gehäuse (9) geeignete Ventilpatrone (10) vorhanden ist.

3. Ventil (1) nach Anspruch 2, **dadurch gekennzeichnet, dass** ein mit fluidleitenden Verbindungselementen versehenes Gehäuse (9) mit einer Aufnahme für die Ventilpatrone (10) vorgesehen ist.

4. Ventil (1) nach Anspruch 2 oder 3, **dadurch gekennzeichnet, dass** die Ventilpatrone (10) einen verschiebbaren Stößel (11) umfasst.

5. Ventil (1) nach Anspruch 4, **dadurch gekennzeichnet, dass** der Stößel mit fluidleitenden verbindungselementen versehen ist.

6. Ventil (1) nach einem der Ansprüche 2 bis 5, **dadurch gekennzeichnet, dass** wenigstens ein Teil der Kurzschluss-Verbindung (5) für die Arbeitsanschlüsse (C, D) bzw. (E, F) im Gehäuse für die Aufnahme der Ventilpatrone (10) angeordnet ist.

7. Ventil (1) nach einem der Ansprüche 2 bis 6, **dadurch gekennzeichnet, dass** wenigstens ein Teil der Kurzschluss-Verbindung (5) für die Arbeitsanschlüsse (C, D) bzw. (E, F) in der Ventilpatrone (10) angeordnet ist.

8. Ventil (1) nach einem der Ansprüche 4 bis 7, **dadurch gekennzeichnet, dass** wenigstens ein Teil der Kurzschluss-Verbindung für die Arbeitsanschlüsse (C, D) bzw. (E, F) im Stößel (11) angeordnet ist.

9. Ventil (1) nach einem der vorhergehenden Ansprüche, **dadurch gekennzeichnet, dass** das Ventil als 6/2-Wegeventil ausgebildet ist.

10. Ventil (1) nach einem der Ansprüche 1 bis 8, **dadurch gekennzeichnet, dass** das Ventil als 6/3-Wegeventil ausgebildet ist.

11. Ventil (1) nach Anspruch 10, **dadurch gekennzeichnet, dass** eine neutrale Schaltstellung für das Ventil ausgebildet ist, in der weder die ersten Arbeitsanschlüsse (E, F) noch die zweiten Arbeitsanschlüsse (C, D) mit den Versorgungsanschlüssen (A, B) durchgeschaltet sind.

12. Ventil (1) nach einem der vorhergehenden Ansprüche, **dadurch gekennzeichnet, dass** für die Betätigung des Ventils eine Magnetspule (7) vorhanden ist.

13. Ventil (1) nach Anspruch 12, **dadurch gekennzeichnet, dass** die Magnetspule (7) als Zweiwege-Magnetspule ausgebildet ist.

14. Ventil (1) nach einem der vorhergehenden Ansprüche, **dadurch gekennzeichnet, dass** für die Rückstellung des Ventils eine Feder (8) vorhanden ist.

15. Ventil (1) nach einem der vorhergehenden Ansprüche, **dadurch gekennzeichnet, dass** das Ventil als Teil eines mit mehreren Ventilen verbindbaren Ventilblockes ausgebildet ist.

## Claims

1. Valve (1) for fluid systems, in particular for hydraulic systems, with two first working connections (C, D) for the inflow and outflow of the fluid to a first, fluid-activated device, and two second working connections (E, F) for the inflow and outflow of the fluid to a second fluid-activated device, and two supply connections (A, B) for the supply-side inflow and outflow of the fluid, **characterised in that** a fluid-guiding short-circuiting connection (5) is provided between the working connections (C and D or E and F) not connected to the supply connections (A, B) in each switch position.

2. Valve (1) according to claim 1, **characterised in that** a valve cartridge (10) is provided that has fluid-guiding connecting elements and is suitable for use in a housing (9).

3. Valve (1) according to claim 2, **characterised in that** a housing (9) provided with fluid-guiding connecting elements is fitted with a mount for the valve cartridge (10).

4. Valve (1) according to claim 2 or 3, **characterised in that** the valve cartridge (10) comprises a displaceable ram (11).

5. Valve (1) according to claim 4, **characterised in that** the ram is provided with fluid-guiding connecting elements.

6. Valve (1) according to one of claims 2 to 5, **characterised in that** at least one part of the short-circuiting connection (5) for the working connections (C, D) or (E, F) is arranged in the housing for mounting the valve cartridge (10).

7. Valve (1) according to one of claims 2 to 6, **characterised in that** at least a part of the short-circuiting connection (5) for the working connections (C, D) or (E, F) is arranged in the valve cartridge (10).

8. Valve (1) according to one of claims 4 to 7, **characterised in that** at least a part of the short-circuiting connection for the working connections (C, D) or (E, F) is arranged in the ram (11).

9. Valve (1) according to one of the preceding claims, **characterised in that** the valve is designed as a 6/2 way valve.

10. Valve (1) according to one of claims 1 to 8, **characterised in that** the valve is designed as a 6/3 way valve.

11. Valve (1) according to claim 10, **characterised in that** a neutral switching position for the valve is formed, in which neither the first working connections (E, F) nor the second working connections (C, D) are connected through to the supply connections (A, B).

12. Valve (1) according to one of the preceding claims, **characterised in that** for the activation of the valve a magnetic coil (7) is provided.

13. Valve (1) according to claim 12, **characterised in that** the magnetic coil (7) is designed as a two-way magnetic coil.

14. Valve (1) according to one of the preceding claims, **characterised in that** a spring (8) is provided for the resetting the valve.

15. Valve (1) according to one of the preceding claims, **characterised in that** the valve is designed as part of a valve block connectable with several valves.

## Revendications

1. Soupape (1) pour systèmes à fluide, notamment pour systèmes hydrauliques, comportant deux premiers raccords de travail (C, D) pour l'arrivée et la sortie du fluide au niveau d'un premier dispositif pouvant être commandé par fluide, deux seconds raccords de travail (E, F) pour l'arrivée et la sortie du fluide au niveau d'un second dispositif pouvant être commandé par fluide et deux raccords d'alimentation (A, B) pour l'arrivée et la sortie du fluide côté alimentation,
**caractérisée en ce qu'**une liaison à court-circuit (5) conductrice de fluide est présente entre les raccords de travail (C et D ou E et F) non reliés aux raccords d'alimentation (A, B) dans la position de commutation concernée.

2. Soupape (1) selon la revendication 1,
**caractérisée en ce qu'**une cartouche de soupape (10) convenant à l'utilisation dans un boîtier (9) et pourvue d'éléments de liaison conducteurs de fluide est présente.

3. Soupape (1) selon la revendication 2,
**caractérisée en ce qu'**il est prévu un boîtier (9) pourvu d'éléments de liaison conducteurs de fluide comportant un logement pour la cartouche de soupape (10).

4. Soupape (1) selon la revendication 2 ou 3,
**caractérisée en ce que** la cartouche de soupape (10) comporte un coulisseau mobile (11).

5. Soupape (1) selon la revendication 4,
**caractérisée en ce que** le coulisseau est pourvu d'éléments de liaison conducteurs de fluide.

6. Soupape (1) selon l'une des revendications 2 à 5,
**caractérisée en ce qu'**au moins une partie de la liaison à court-circuit (5) pour les raccords de travail (C, D) ou (E, F) est agencée dans le boîtier pour recevoir la cartouche de soupape (10).

7. Soupape (1) selon l'une des revendications 2 à 6,
**caractérisée en ce qu'**au moins une partie de la liaison à court-circuit (5) pour les raccords de travail (C, D) ou (E, F) est agencée dans la cartouche de soupape (10).

8. Soupape (1) selon l'une des revendications 4 à 7,
**caractérisée en ce qu'**au moins une partie de la liaison à court-circuit pour les raccords de travail (C, D) ou (E, F) est agencée dans le coulisseau (11).

9. Soupape (1) selon l'une des revendications précédentes,
**caractérisée en ce que** la soupape est réalisée sous la forme d'une soupape à 6/2 voies.

10. Soupape (1) selon l'une des revendications 1 à 8,
**caractérisée en ce que** la soupape est réalisée sous la forme d'une soupape à 6/3 voies.

11. Soupape (1) selon la revendication 10,
**caractérisée en ce qu'**une position de commutation neutre pour la soupape est réalisée **en ce que** ni les premiers raccords de travail (E, F) ni les seconds raccords de travail (C, D) ne sont connectés aux raccords d'alimentation (A, B).

12. Soupape (1) selon l'une des revendications précédentes,
**caractérisée en ce qu'**une bobine d'excitation (7) est présente pour l'actionnement de la soupape.

13. Soupape (1) selon la revendication 12,
**caractérisée en ce que** la bobine d'excitation (7) est réalisée sous la forme d'une bobine d'excitation à deux voies.

14. Soupape (1) selon l'une des revendications précédentes,
**caractérisée en ce qu'**un ressort (8) est présent pour le retour de la soupape.

15. Soupape (1) selon l'une des revendications précédentes,
**caractérisée en ce que** la soupape est réalisée en tant que partie d'un bloc de distribution et de régulation pouvant être relié à plusieurs soupapes.
